# EUROPÄISCHE PATENTSCHRIFT

(11) **EP 0 417 451 B1**
(45) Veröffentlichungstag und Bekanntmachung des Hinweises auf die Patenterteilung: **18.11.1993**
(21) Anmeldenummer: 90114657.1
(22) Anmeldetag: 31.07.1990
(51) Int. Cl.: A22C 15/00, B65G 47/84

(54) **Verfahren und Vorrichtung zum Zu- und Abführen von Rauch- oder Kochstäben zum automatischen Aufhängen von Schlaufen versehenen Würsten**
Method and device for introduction and removal of smoking or cooking bars for automatic suspension of sausages provided with loops for hanging
Méthode et dispositif pour amener et emmener des tiges à fumer ou des tiges à cuire destinées à la suspension automatique de saucissons munis de bandes de suspension

(30) Priorität: 15.09.1989 DE 3930876
(43) Veröffentlichungstag der Anmeldung: 20.03.1991
(73) Patentinhaber: Kollross, Günter, D-64521 Gross Gerau (DE)
(72) Erfinder: Steinbis, Fritz Karl, D-6080 Gross Gerau (DE); Kollross, Günter, W-6080 Gross Gerau-Dornheim (DE)
(74) Vertreter: Beyer, Werner, Dipl.-Ing.

(56) Entgegenhaltungen:
- DE-A- 3 206 956
- DE-A- 3 437 830
- DE-A- 3 502 274
- DE-A- 3 536 460

## Beschreibung

Die Erfindung betrifft ein Verfahren zum Zu- und Abführen von Rauch- oder Kochstäben zu bzw. von einer Beladestation, an welcher jeweils ein Stab zum automatischen Aufhängen einer Anzahl Würste an daran angebundenen Schlaufen einseitig fest eingespannt wird und an wenigstens zwei dazu beabstandeten Stellen wechselweise unterstützbar ist, sowie eine Vorrichtung zur Durchführung dieses Verfahrens.

Aus der DE-OS 33 22 759, von welcher die Erfindung ausgeht, ist es bekannt, auf Füllautomaten hergestellte Einzelwürste an Schlaufen während der Befestigung an den Wurstenden mit einem Führungselement zu erfassen und über dieses einem angeschlossenen, an einem Ende festgespannten Rauch- oder Kochstab zuzuleiten, der zusammen mit mehreren anderen Stäbchen in sternförmiger Anordnung von Hand lösbar in eine drehbare Halterung einsetzbar und nach dem Beladen abnehmbar ist. Das Führungselement ist an wenigstens zwei Stellen wechselweise abstützbar.

Aus der DE-PS 34 37 830 ist es weiterhin bekannt, die mit den derart hergestellten Würsten zu beladenden Rauch- oder Kochstäbe von Hand einzeln in eine um ihre Längsachse drehbare und an zwei Stellen wechselweise abstützbare Abhängeeinrichtung einzuschieben und nach erfolgter Beladung zur manuellen Überführung auf den Rauch- oder Kochwagen wieder herauszuziehen. Zur Bedienung dieser Vorrichtung sind zwei Personen erforderlich. Dennoch entstehen durch das Einschieben und Wiederherausziehen beträchtliche Totzeiten, und die Bedienungspersonen sind ständig an den Füll- und Aufhängetakt der Würste gebunden.

Aufgabe der Erfindung ist es demgegenüber, ein Verfahren und eine Vorrichtung zu dessen Durchführung zu schaffen, das bzw. die mit einer Bedienungsperson auskommt, wobei die Totzeiten wesentlich verringert sind und die Bedienungsperson weitgehend unabhängig vom Füll- und Abhängetakt ist.

Die Erfindung löst diese Aufgabe verfahrensgemäß dadurch, daß die Stäbe zunächst aus einem Vorrat einzeln und nacheinander in eine Bereitschaftsstellung gebracht werden, in welcher der bereitgestellte Stab in horizontaler Lage zwischen beiden Enden untergriffen ist, daß dieser Stab daraufhin an einem Ende fest eingespannt und in diesem Zustand durch eine hauptsächlich horizontale Bewegung quer zu seiner Längsrichtung der Beladestation zugeführt wird, und daß schließlich der beladene Stab an der Beladestation an beiden Enden unterfaßt und durch wenigstens eine weitere hauptsächlich horizontale Querbewegung einer Wartestation, die als Sammelstation dient, zugeführt wird, in der eine Anzahl beladener Stäbe zur schubweisen Überführung auf einen Rauch- oder Kochwagen gesammelt werden.

Vorteilhafte Ausgestaltungen des erfindungsgemäßen Verfahrens ergeben sich aus den Unteransprüchen 2 bis 5.

Eine Vorrichtung zur Durchführung des erfindungsgemäßen Verfahrens zeichnet sich in weiterer Ausgestaltung der Erfindung aus durch
- ein Magazin zur Bevorratung einer Anzahl unbeladener Rauch- oder Kochstäbe in horizontaler Lage,
- eine steuerbare Vereinzelungseinrichtung, welche die Bewegung je eines Stabes aus dem Magazin in eine Bereitschaftsstellung bewirkt,
- eine bewegbare Klemmeinrichtung, mittels welcher der bereitgestellte Stab in eine Beladestellung überführbar und dort an einem Ende fest einspannbar ist, und
- eine Transporteinrichtung, von welcher der in der Beladestellung mit Würsten behängte Stab beidendig erfaßbar und einer Sammelstation zuführbar ist.

Vorteilhafte Ausbildungen einer solchen Vorrichtung gehen aus den Unteransprüchen 8 bis 16 hervor.

Die Erfindung wird nachstehend anhand zweier Ausführungsbeispiele von Vorrichtungen zur Durchführung des erfindungsgemäßen Verfahren näher erläutert. Es zeigen:
- Fig. 1: in perspektivischer, schematischer Darstellung eine erste Ausführung einer Vorrichtung zum Zu- und Abführen von Rauch- oder Kochstäben zu bzw. von einer Beladestation zu Beginn eines Arbeits-zyklus mit einem Stab in Beladestellung und einem weiteren Stab in Bereitschaftstellung,
- Fig. 2: dieselbe Vorrichtung beim Beladen eines Rauch- oder Kochstabes mit einer Wurst,
- Fig. 3: die Vorrichtung mit der Wurst in weiter vorgerückter Stellung,
- Fig. 4: die Vorrichtung nach vollständiger Beladung des Stabes mit einer bestimmten Anzahl von Würsten,
- Fig. 5: die Vorrichtung während der Leerbewegung des Hubbalkens in dessen Aufnahmestellung,
- Fig. 6: die Vorrichtung mit dem Hubbalken in der Aufnahmestellung,
- Fig. 7: die Vorrichtung mit dem Hubbalken während der Transportbewegung,
- Fig. 8: die Vorrichtung mit dem Hubbalken in der Absetzstellung, bevor ein weiterer Stab aus dem Magazin in die Bereitschaftsstellung freigegeben ist,
- Fig. 9: in perspektivischer, schematischer Darstellung eine andere Ausführung der Vorrichtung mit einem noch unbeladenen Stab in Beladestellung, wobei auch eine Anzahl zuvor beladener Stäbe dargestellt ist,
- Fig. 10: diesselbe Vorrichtung während des Beladens, wobei ein weiterer Stab in die Bereitschaftsstellung gebracht worden ist, und
- Fig. 11: die Vorrichtung mit dem inzwischen voll beladenen Stab in Abtransportstellung.

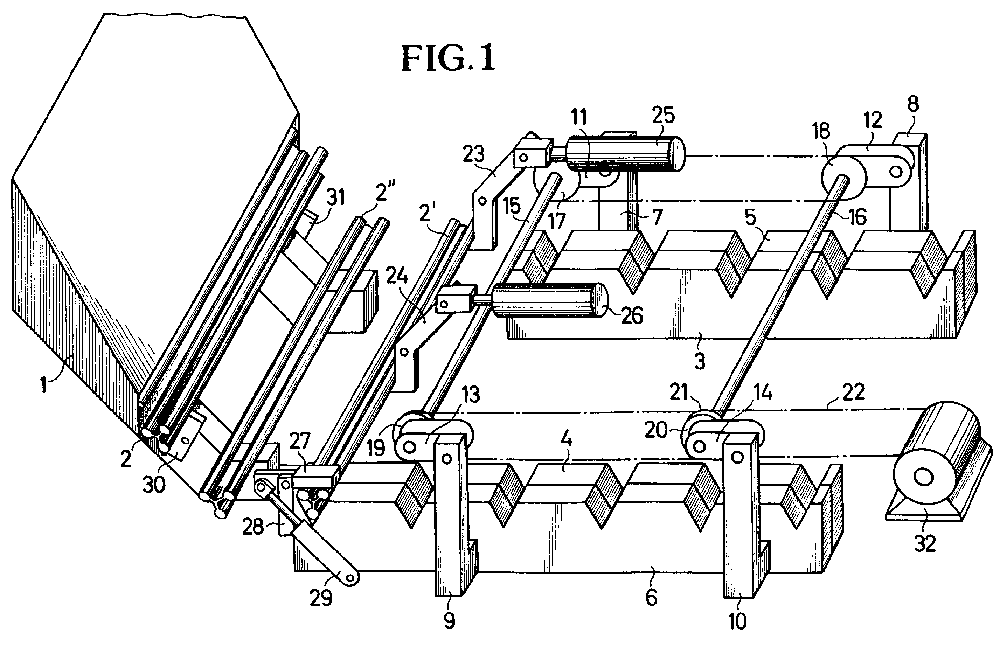

Die in den Figuren 1 bis 8 gezeigte Vorrichtung besteht im wesentlichen aus einem Magazin 1 für eine Anzahl Rauch- oder Kochstäbe 2, zwei feststehenden Stützbalken 3 und 4, die in geeigneter Teilung mit Kerben zur Aufnahme der Stäbe 2 versehen sind, und zwei beweglichen Hubbalken 5 und 6, die in gleicher Teilung mit Kerben versehen sind. Der Hubbalken 6 und der zugehörige Stützbalken 4 sind um eine Kerbenteilung in Richtung nach links, d.h. in Richtung zum Magazin 1 länger als die Balken 3 und 5 und weisen im verlängerten Bereich je eine weitere Kerbe auf. An den Hubbalken 5 und 6 sind je zwei Tragelement 7, 8 bzw. 9, 10 angebracht, die an Kurbelarmen 11, 12 bzw. 13, 14 angelenkt sind, welche paarweise auf Wellen 15 und 16 sitzen. Die Wellen 15, 16 tragen an den Enden Kettenräder 17, 18, 19 und 20, die paarweise durch strichpunktiert angedeutete Ketten miteinander antriebsmäßig verbunden sind. Auf der Welle 16 ist ferner ein Kettenrad 21 befestigt, das durch eine wiederum nur strichpunktiert angedeutete Kette 22 mit einem nicht sichtbaren Kettenrad auf der Welle eines Antriebsmotors 32 verbunden ist.

Zur Vorrichtung gehören ferner zwei schwenkbar angeordnete Stützhebel 23, 24, die durch pneumatische oder hydraulische Kraftzylinder 25 bzw. 26 zwischen einer Stützstellung, in der sie die in Beladestellung befindlichen Rauch- oder Kochstab 2 untergreifen, und einer Freigabestellung verschwenkbar sind. Die beiden Stellungen können gleichzeitig oder abwechselweise eingenommen werden.

Am Hubbalken 6 ist eine Klemmvorrichtung angebracht, die aus einem mit der vordersten Kerbe zusammenwirkendenKlemmhebel 27, einem Lager 28 und einem pneumatischen oder hydraulischen Kraftzylinder 29 besteht.

Das Magazin 1 hat die Gestalt eines schräg geneigten Trichters mit einer (nicht sichtbaren) Eingabeöffnung und einer Ausgabeöffnung, an der mit Abstand zwei Sperrhebel 30 und 31 schwenkbar gelagert sind, die durch (gleichfalls nicht sichtbare) Antriebsorgane wie Kraftzylinder zwischen einer Sperrstellung und einer Freigabestellung verschwenkbar sind.

Die beschriebene Vorrichtung arbeitet wie folgt:
In Fig. 1 befindet sich die Vorrichtung in ihrer Ausgangsposition für das Beladen eines in der Beladestellung befindlichen Kochstabs. Die Hubbalken 5, 6 liegen deckungsgleich neben den Stützbalken 3 und 4. Die Kurbelarme 11, 12, 13 und 14 weisen in waagerechter Stellung nach rechts. In den weiteren Kerben der vorderen Balken 4 und 6 ist ein in üblicher Weise mit regelmäßigem Dreibeinquerschnitt ausgebildeter Rauch- oder Kochstab 2' aufgenommen und in der Kerbe des Hubbalkens 6 Klemmenhebel 27 an seinem einen Ende fest eingespannt. Die Stützhebel 23 und 24 sind beide mit Hilfe der Kraftzylinder 25 und 26 in die Stützstellung eingeschwenkt und unterstützen den Stab 2' zusätzlich an zwei Stellen.

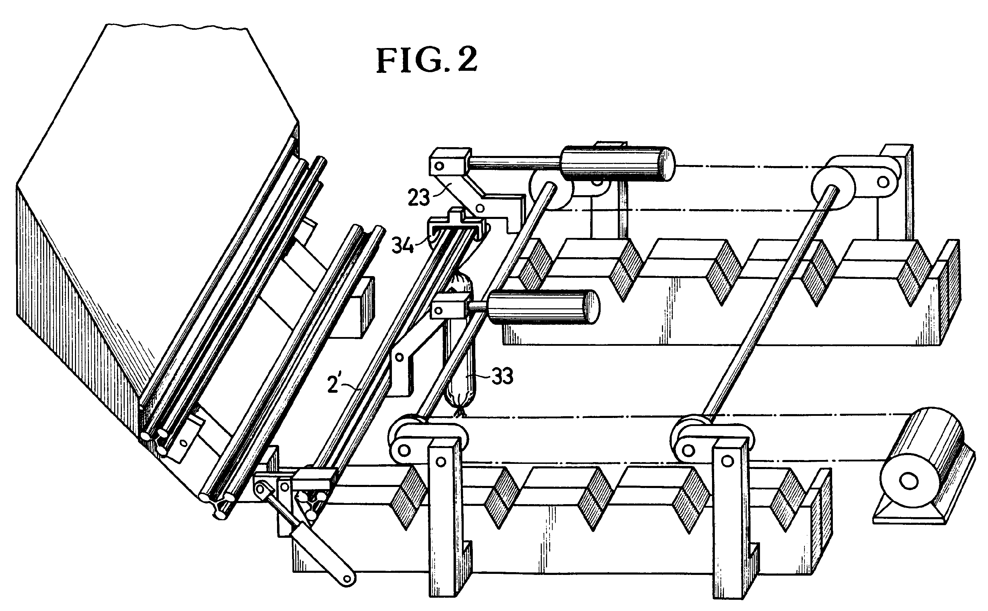

In Fig. 2 beginnt das Beladen des Rauch- oder Kochstabes 2' mit Würsten. Hierfür ist zunächst der Stützhebel 23 in seine Freigabestellung verschwenkt, so daß der Aufhängehaken 34 einer im übringen nicht gezeigten Aufhängeeinrichtung eine erste Wurst 33 über das freie Ende des Stabes 2' auf diesen bringten kann.

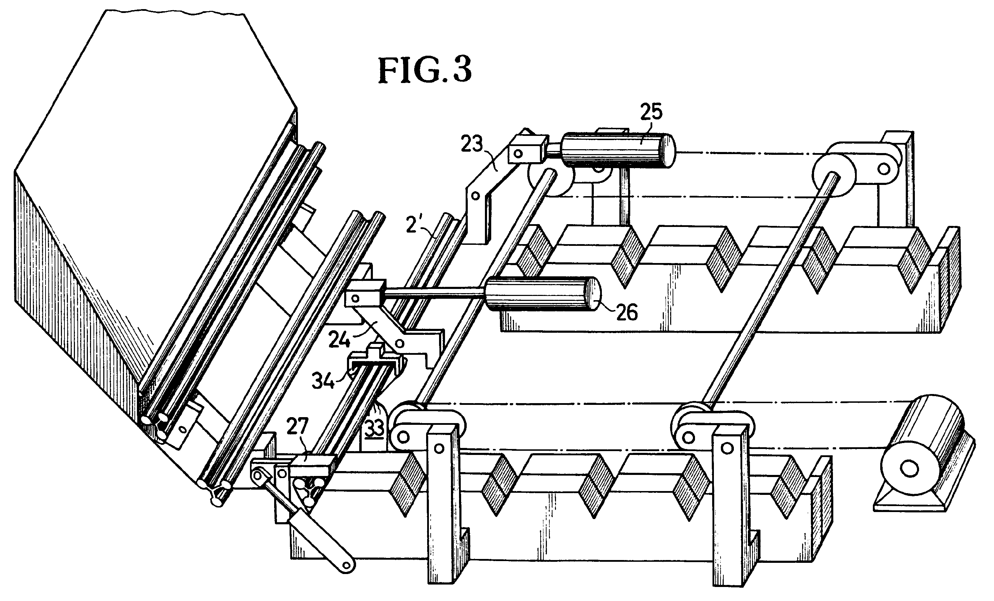

Sobald die Wurst 33 den Stützhebel 23 passiert hat, wird dieser vom Kraftzylinder 25 wider in Stützstellung gebracht, und der Stützhebel 24 wird durch den Kraftzylinder 26 in die Freigabestellung verschwenkt (Fig. 3), so daß der Aufhängehaken 34 mit der daran hängenden Wurst 33 den Stützhebel 24 passieren kann. Schließlich wird die Wurst 33 vom Aufhängehaken 34 nahe der Einspannstelle des Stabes 2' am Klemmhebel 27 freigegeben.

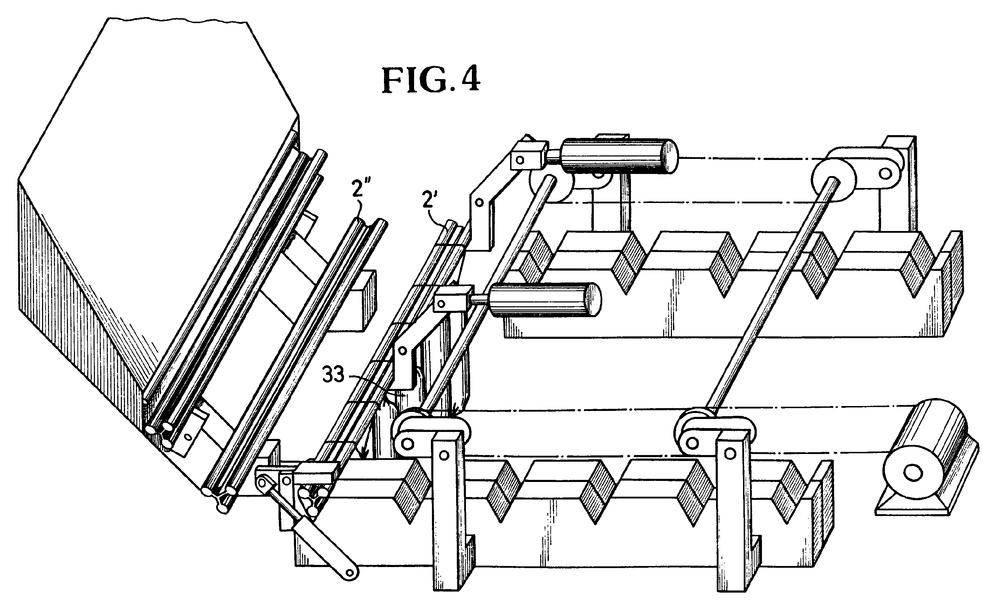

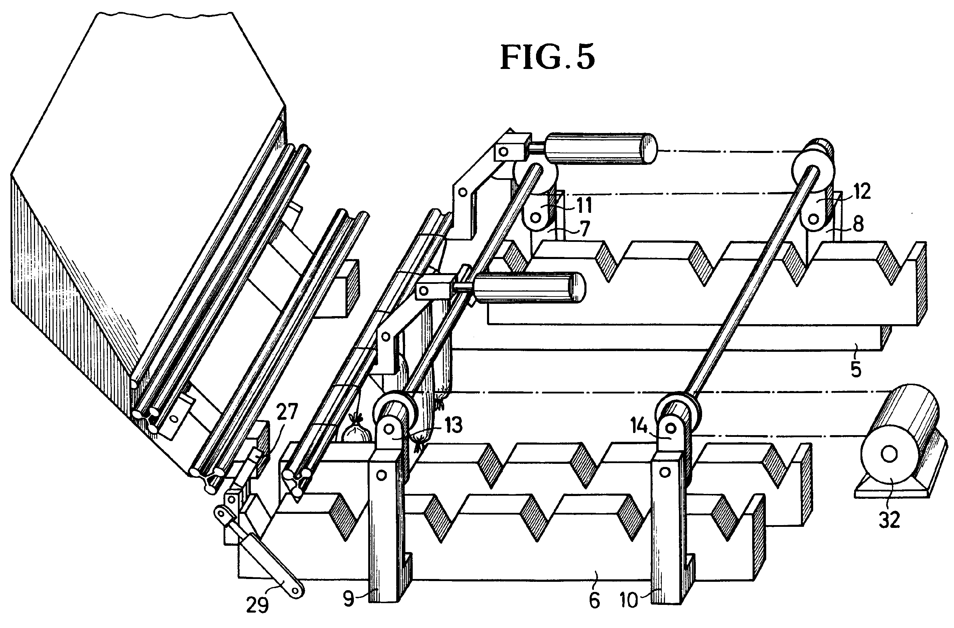

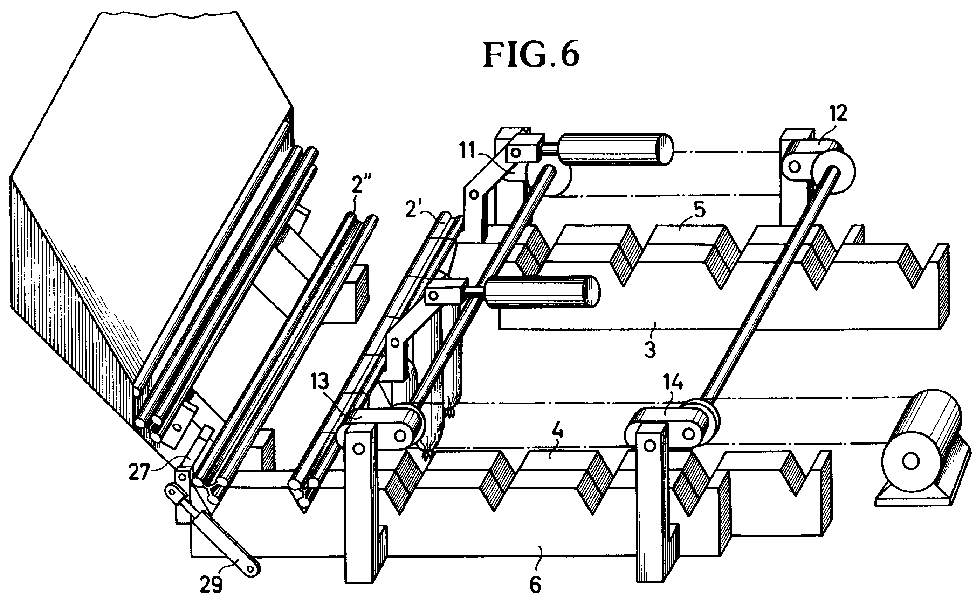

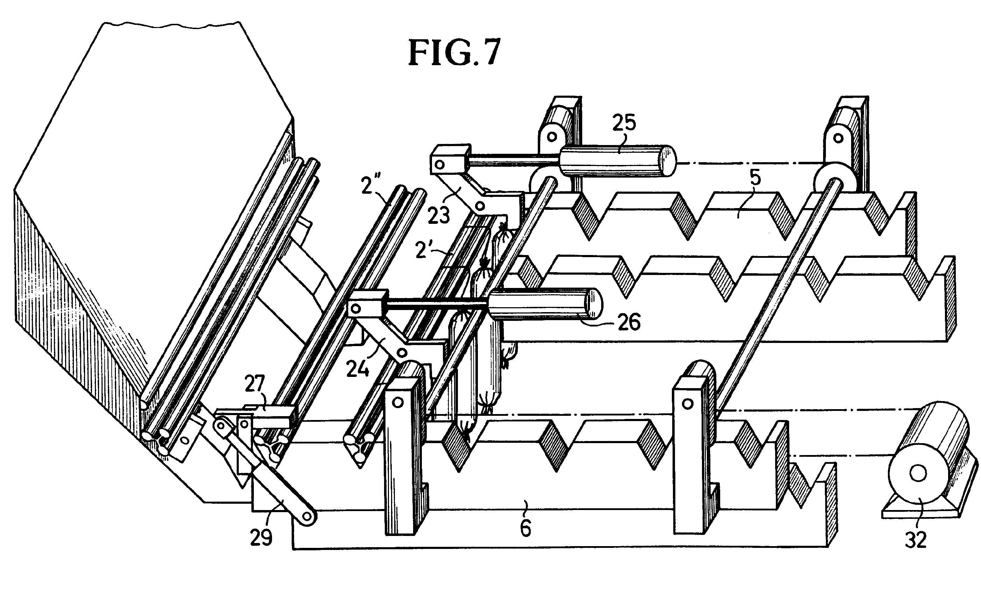

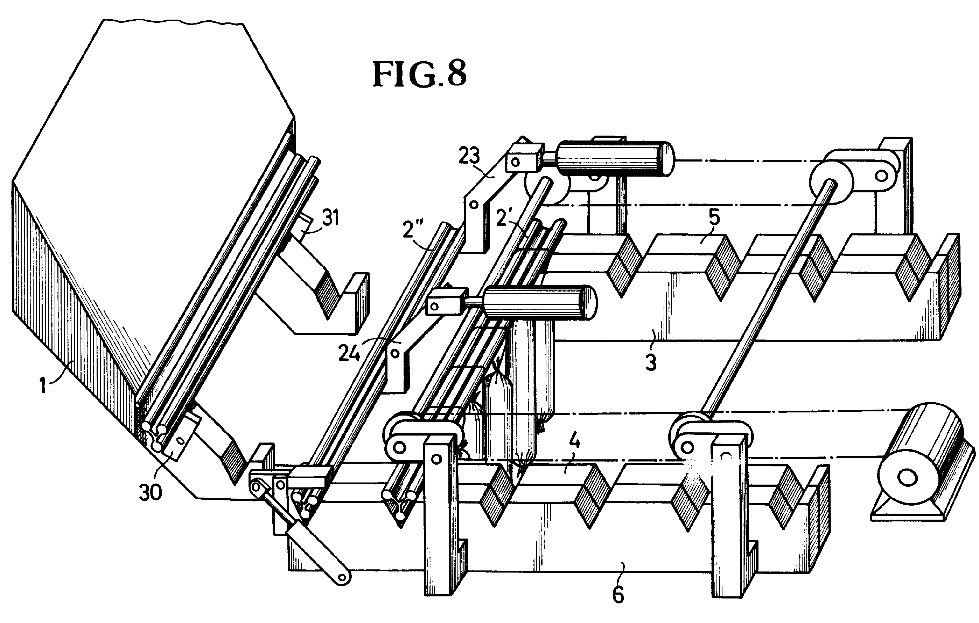

Der vorbeschriebene Vorgang wiederholt sich, bis der Rauch- oder Kochstab 2' voll mit Würsten behängt ist (Fig. 4). Um diesen abzuführen und einen neuen Stab 2'', der sich bereits in Bereitschaftsstellung befindet, in die Beladestellung zu bringen, wird zunächst der Klemmhebel 27 durch den Kraftzylinder 29 in seine Freigabestellung verschwenkt. Dann wird der Antriebsmotor 32, der auch ein Hydraulikmotor sein kann, für eine Umdrehung eingeschaltet und verschwenkt die Kurbelarme 11, 12, 13, 14 mit den an den Halteelementen 7, 8, 9, 10 hängenden Hubbalken 5, 6 zunächst leer in die Stellung nach Fig. 5. Nach einer weiteren Vierteldrehung des Motors 32 weisen die Kurbelarm 11, 12, 13, 14 nach links (Fig. 6), und die Kerben der Hubarme 5 und 6 decken sich wieder mit Kerben der Stützarme 3 und 4. In dieser Stellung wird der Klemmhebel 27 von Kraftzylinder 29 wieder in seine Klemmstellung gebracht und klemmt den in Bereitschaftsstellung befindlichen Rauch- oder Kochstab 2'' in der vordersten Kerbe des Hubbalkens 6. Nun werden die Stützhebel 23 und 24 durch die Kraftzylinder 25 und 26 gemeinsam in ihrer Freigabestellung verschwenkt, und beim Weiterdrehen des Antriebsmotors 32 werden sowohl der unbeladene Stab 2'' als auch der beladene Stab 2' von den Hubbalken 5, 6 angehoben (Fig. 7) und schließlich in die Kerben der Stützbalken 3, 4 um eine Kerbenteilung versetzt wieder abgesetzt (Fig. 8). Mit dem Absetzen werden auch die Stützhebel 23, 24 wieder in ihre Stützstellung verschwenkt, und der nunmehr in der Beladestellung befindliche Stab 2'' kann in der vorbeschriebenen Weise mit Würsten beladen werden, während sich der beladene Stab 2' in einer ersten Warteposition zur Überführung auf den Rauch - oder Kochwagen befindet. Es bedarf dann nur noch der Betätigung der Sperrhebel 30, 31, um einen weiteren Rauch- oder Kochstab aus dem Magazin 1 in die Bereitschaftsstellung zu bringen, und die Ausgangsposition nach Fig. 1 ist wieder erreicht.

Nach jedem solchen Zyklus befindet sich der zuerst beladene Stab 2' auf den Stütsbalken 3, 4 um eine weitere Kerbe nach rechts versetzt, bis die Stütsbalken 3, 4 voll beladen sind. Spätestens in diesem Zeitpunkt werden nun alle beladenen Stäbe von Hand oder mit einer geeigneten Vorrichtung wie etwa einem Roboter von den Stützbalken 3, 4 abgenommen und in den Rauch- oder Kochwagen eingehängt. Bis dahin hatte die Bedienungsperson der Vorrichtung jedoch Zeit, andere Arbeiten zu verrichten. Je länger die Stützbalken 3, 4 und die Hubbalken 5, 6 ausgebildet sind und je mehr Kerben sie dementsprechend enthalten, umso länger ist diese Zeitspanne.

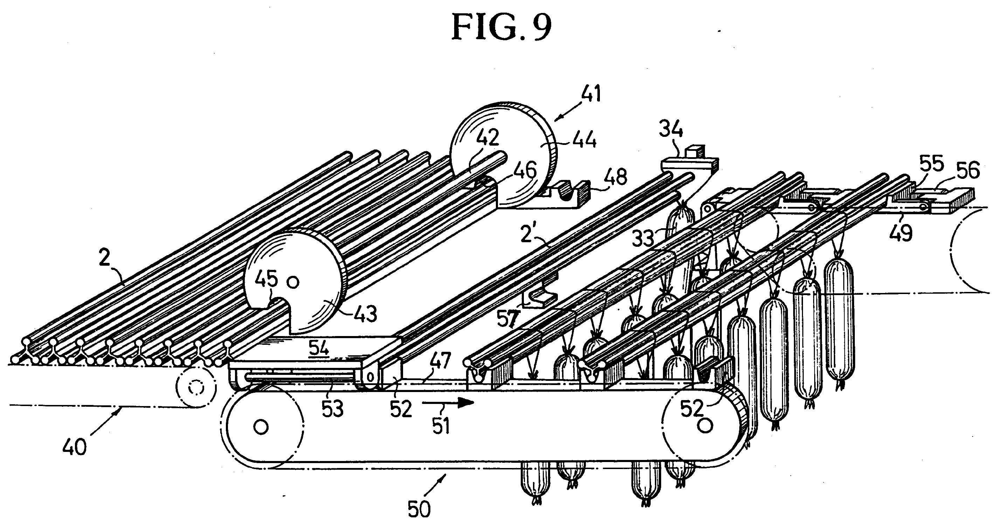

Die in den Figuren 9 bis 11 gezeigte Vorrichtung arbeitet im Prinzip genauso wie die zuvor beschriebene Vorrichtung, nur mit dem Unterschied, daß die ebenfalls schrittweise erfolgenden Transportbewegungen ausschließlich horizontal verlaufen.

Anstelle des festen Magazins 1 der zuvor beschriebenen Vorrichtung ist ein bewegliches Magazin 40, bestehend aus zwei parallelen Förderbändern, vorgesehen, auf denen die leeren Rauch- oder Kochstäbe 2 zu einer Vereinzelungs- oder Freigabevorrichtung 41 transportiert werden. Die Förderbänder des Magazins 40 können schrittweise angetrieben werden; sie können jedoch auch ständig umlaufen und dabei mit ihren glatten Oberflächen unter den von der Vereinzelungsvorrichtung 41 zurückgehaltenen Stäben 2 hindurchgleiten.

Die Vereinzelungsvorrichtung 41 besteht aus zwei auf einer Welle 42 befestigten Sperrscheiben 43, 44, die mit Ausschnitten 45 bzw. 46 am Umfang versehen sind. Die Ausschnitte 45, 46 sind so geformt, daß beim Verschwenken der Steuerscheiben um 90° entgegen dem Uhrzeigersinn jeweils der vorderste der magazinierten Stäbe 2 erfaßt und mit einem Ende auf ein Förderband 47 überführt und mit dem anderen Ende in die Kerbe einer Halteklaue 48 eingelegt wird, die zwischen einer angehobenen Aufnahmestellung und einer herabgeklappten Freigabestellung gesteuert verschwenkbar ist.

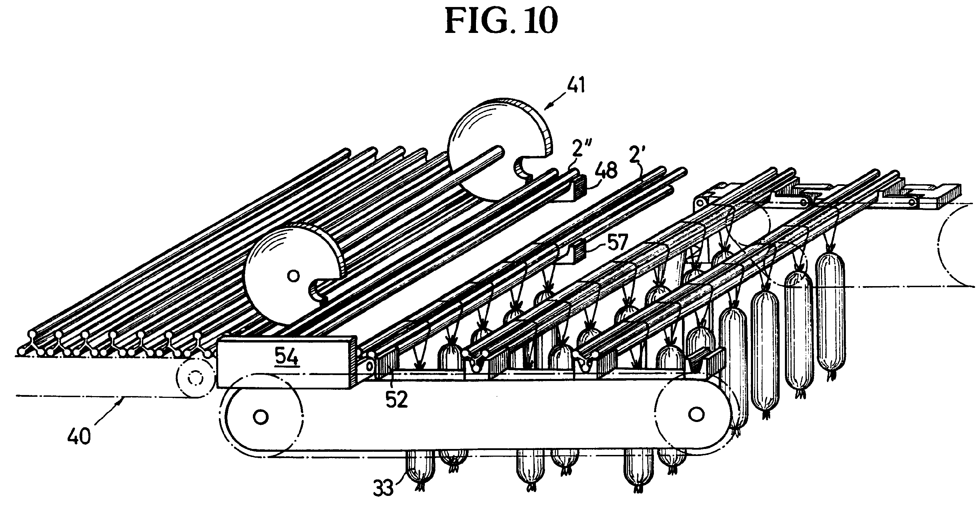

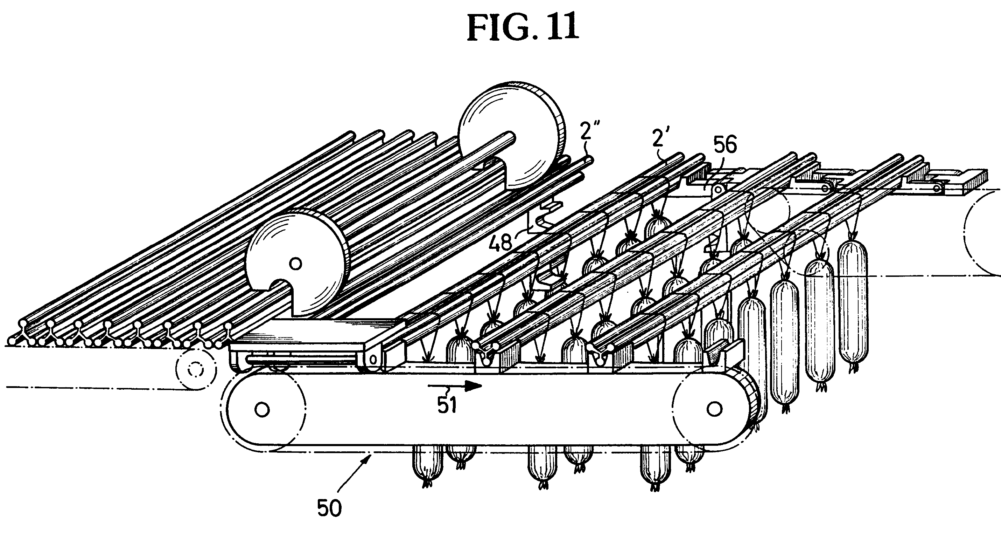

Das Förderband 47 bildet zusammen mit einem dazu parallelen Förderband 49 eine Transporteinrichtung 50, die durch einen (nicht gezeigten) Antrieb schrittweise um eine bestimmte Strecke oder Teilung in Richtung des Pfeils 51 fortschaltbar ist. Im Abstand dieser Teilung sind auf den Umfang des Förderbandes 47 mit Kerben versehene Führungsklauen 52 fest angeordnet, von denen im Stillstand der Transporteinrichtung 50 jeweils eine Führungsklaue 52 am Anfang des Förderbandes 47 mit der Halteklaue 48 fluchtet und die in Richtung des Pfeils 51 nächste Führungsklaue 52 die Beladestellung für einen Rauch- oder Kochstab 2' bestimmt, der mit Hilfe eines um eine ortsfeste Achse 53 gesteuert verschwenkbaren Klemmdeckels 54 in der Kerbe dieser Führungsklaue festgeklemmt ist. Der Klemmdeckel 54 ist so lang ausgebildet, daß er auch die mit der Halteklaue 48 fluchtende erste Führungsklaue 52 überdeckt, und kann aus der in den Fig. 9 und 11 gezeigten Klemmstellung in die in der Fig. 10 dargestellte Freigabestellung hochgeklappt werden.

Das Förderband 49 ist im gleichen Teilungsabstand mit Führungsklauen 55 versehen, die mit den Führungsklauen 52 des Förderbandes 47 paarweise fluchten. Die Führungsklauen 55 sind jedoch im Unterschied zu den Führungsklauen 52 nicht fest auf dem Förderband 49 angeordnet, sondern sitzen an Hebeln 56, die am Förderband 49 schwenkbar angelenkt und am oberen Trum zum Magazin 40 hin gerichtet sind. Das Förderband 49 ist außerdem kürzer als das Förderband 47 ausgebildet und endet in einem solchen Abstand von der Halteklaue 48, das ein Hebel 56' am Anfang des Förderbandes 49 mittels einer (nicht gezeigten) Hubeinrichtung gesteuert zwischen der in Fig. 9 dargestellten abgklappten Stellung und der in Fig. 11 dargestellten hochgeklappten Stellung verschwenkbar ist, in der er den in der Beladestellung befindlichen Rauch- oder Kochstab 2' am freien Ende untergreift.

Schließlich ist für den in der Beladestellung befindlichen Rauch- oder Kochstab 2' eine zwischen einer Freigabestellung (Fig. 9) und einer Stützstellung (Fig. 10) verschwenkbare Stützklaue 57 vorgesehen, die in der Stützstellung den Stab 2' etwa in der Mitte untergreift.

Die beschriebene Vorrichtung arbeitet wie folgt:
Fig. 9 zeigt die Vorrichtung in der Ausgangsstellung eines Arbeitszyklus, in welcher der in der Beladestellung vom Klemmdeckel 54 festgeklemmte Rauch- oder Kochstab 2' noch unbeladen ist. Die Stützklaue 57 befindet sich in der Freigabestellung, so daß eine mit ihrer Aufhängeschlaufe an einem Aufhängehaken 34 hängende Wurst 33 auf den Stab 2' aufgeschoben und schließlich am Einspannende abgesetzt werden kann. In diesem Zustand sind alle nachfolgenden Rauch- oder Kochstäbe 2' noch von den Sperrscheiben 43, 44 auf dem Magazin 40 zurückgehalten.

Wenn nun der in Beladestellung befindliche Rauch- oder Kochstab 2' etwa zur Hälfte mit Würsten 33 behängt ist (Fig. 10), wird die Stützklaue 57 in die Stützstellung gebracht, und der Klemmdeckel 54 wird hochgeklappt. Dies ist möglich, weil die Stützklaue 57 den in Beladestellung befindlichen Stab 2' abfängt und es deshalb keiner Klemmung an der Führungsklaue 52 bedarf. Mit dem Hochklappen des Klemmdeckels 54 wird jedoch auch die am Anfang des Förderbandes 47 befindliche Stützklaue freigegeben, so daß die Vereinzelungsvorrichtung 41 betätigt werden kann und den vordersten Stab 2'' aus dem Magazin 40 zu dieser Führungsklaue und der Halteklaue 48 befördert. Danach wird der Klemmdeckel 54 wieder in die Klemmstellung gebracht.

Nun kann der in der Beladestellung befindliche Stab 2' vollständig mit Würsten beladen werden. Wenn dieser Zustand erreicht ist, wird, wie in Fig. 11 gezeigt, der erste Hebel 56 am Förderband 49 hochgeklappt, so daß er das freie Ende des in der Beladestellung befindlichen Stabes 2' untergreift. Weiterhin wird die Halteklaue 48 in die Freigabestellung herabgeklappt, so daß der in der Bereitschaftsstellung befindliche Stab 2'' freigegeben wird. Nun kann die Transporteinrichtung 50 um eine Teilung in Richtung des Pfeils 51 fortgeschaltet werden, so daß der leere Stab 2'' in die Beladestellung und der zuvor beladene Stab 2' in eine erste Warteposition auf der Transporteinrichtung 50 gelangen, die als Sammelstation dient.

In den Fig. 9 und 10 sind zwei weitere, mit Würsten beladene Stäbe dargestellt, die sich dort bereits in Warteposition befinden, und es ist nur noch die vorderste Warteposition frei. Mit der soeben erwähnten Fortschaltung der Transporteinrichtung 10 rücken diese Stäbe entsprechend auch nach vorn, so daß alle Wartepositionen besetzt sind. In diesem Zustand muß nun die Bedienungsperson die wartenden beladenen Rauch- oder Kochstäbe von der Transporteinrichtung 50 abnehmen und in den Rauch- oder Kochwagen einhängen. Sie hat dann während der folgenden drei Arbeitsspiele Zeit, anderen Tätigkeiten nachzugehen.

Die Anzahl der Wartepositionen ist selbstverständlich nicht auf drei beschränkt, sondern kann beliebig vergrößert werden.

Die beschriebenen Vorrichtungen können jeweils zusammen mit einer Wurstfüllmaschine samt Einschnür- und Verschließwerkzeug und einer geeigneten Wurstaufhängeeinrichtung nach einem bestimmten Programm elektronisch gesteuert werden, das in der Beladestellung eines Rauch- oder Kochstabes den Zeittakt und die Anzahl der auf der Füllmaschine herzustellenden und auf den Stab zu überführenden Würste je nach Kaliber- und Längen- bzw. Gewichtsvorgabe bestimmt und entsprechend auch die Kraftzylinder zur Betätigung der Stützelemente steuert, woraufhin die Füllmaschine und die Aufhängeeinrichtung für die Dauer des Stabwechsels verriegelt und die einzelnen Bewegungsabläufe für den Stabwechsel in den beschriebenen Vorrichtungen gesteuert werden.

## Patentansprüche

1. Verfahren zum Zu- und Abführen von Rauch- oder Kochstäben (2) zu bzw. von einer Beladestation, an welcher jeweils ein Stab (2) zum automatischen Aufhängen einer Anzahl Würste an daran angebundenen Schlaufen einseitig fest eingespannt wird und an wenigstens zwei dazu beabstandeten Stellen wechselweise unterstützbar ist, **dadurch ge****kennzeichnet,** daß die Stäbe zunächst aus einem Vorrat (1, 40) einzeln und nacheinander in eine Bereitschaftsstellung gebracht werden, in welcher der bereitgestellte Stab (2) in horizontaler Lage zwischen beiden Enden untergriffen ist, daß dieser Stab (2) daraufhin an einem Ende fest eingespannt und in diesem Zustand durch eine hauptsächlich horizontale Bewegung quer zu seiner Längsrichtung der Beladestation zugeführt wird, und daß schließlich der beladene Stab (2) an der Beladestation an beiden Enden unterfaßt und durch wenigstens eine weitere hauptsächlich horizontale Querbewegung in derselben Richtung einer Sammelstation zugeführt wird, in der eine Anzahl beladener Stäbe (2) zur schubweisen Überführung auf einen Rauch- oder Kochwagen gesammelt werden.

2. Verfahren nach Anspruch 1, **dadurch gekennzeichnet,** daß die Querbewegungen aller Stäbe (2) gleichzeitig erfolgen.

3. Verfahren nach Anspruch 1 oder 2, **dadurch gekennzeichnet,** daß sich die Querbewegungen in einem vorgegebenen Zeittakt wiederholen.

4. Verfahren nach einem der vorhergehenden Ansprüche, **da****durch gekennzeichnet,** daß die Querbewegungen der beladenen Rauch- oder Kochstäbe (2) mit Hub- und Senkbewegungen kombiniert sind.

5. Verfahren nach einem der vorhergehenden Ansprüche, **da****durch gekennzeichnet,** daß die einzelnen Bewegungsabläufe nach einem vorgegebenen Programm elektronisch gesteuert werden, das während eines vollständigen Zu- und Abführzyklus den Betrieb vorgeschalteter Einrichtungen zur Wurstherstellung und -aufhängung verriegelt.

6. Verfahren nach Anspruch 5, **dadurch gekennzeichnet,** daß die kombinierten Bewegungen der beladenen Rauch- oder Kochstäbe (2) halbkreisförmig verlaufen.

7. Vorrichtung zur Durchführung des Verfahrens nach einem der vorhergehenden Ansprüche, **gekennzeichnet durch**
- ein Magazin (1; 40) zur Bevorratung einer Anzahl unbeladener Rauch- oder Kochstäbe (2) in horizontaler Lage,
- eine steuerbare Vereinzelungseinrichtung (30, 31; 41), welche die Bewegung je eines Stabes (2) aus dem Magazin (1; 40) in eine Bereitschaftsstellung bewirkt,
- eine Klemmeinrichtung (27; 54), mittels welcher der bereitgestellte Stab (2) in eine Beladestellung überführbar und dort an einem Ende fest einspannbar ist, und
- eine Transporteinrichtung (3, 4, 5, 6; 50), von welcher der in der Beladestellung mit Würsten (33) behängte Stab (2) beidendig erfaßbar und einer Sammelstation zuführbar ist.

8. Vorrichtung nach Anspruch 7, **dadurch gekennzeichnet,** daß das Magazin (1) als im Querschnitt trichterförmiger Kasten mit einer oberen Eingabeöffnung und einer unteren Ausgabeöffnung ausgebildet ist und daß an der Ausgabeöffnung steuerbare Sperrglieder (30, 31) angeordnet sind, von denen die magazinierten Rauch- oder Kochstäbe (2) unter Schwerkraft einzeln in die Bereitschaftsstellung freigebbar sind.

9. Vorrichtung nach Anspruch 7 oder 8, **dadurch gekennzeichnet,** daß die Transporteinrichtung aus zwei mit Querabstand horizontal angeordneten festen Stützbalken (3, 4) und zwei jeweils neben einem Stützbalken beweglich angeordneten Hubbalken (5, 6) besteht, von denen die Stäbe (2) von den Stützbalken (3, 4) abhebbar, um eine bestimmte Strecke horizontal bewegbar und wieder auf die Stützbalken (3, 4) absetzbar sind.

10. Vorrichtung nach Anspruch 9, **dadurch gekennzeichnet,** daß die Hubbalken (5, 6) und die Stützbalken (3, 4) im Abstand der horizontalen Bewegungsstrecke mit Kerben zur Aufnahme der Stäbe (2) versehen sind.

11. Vorrichtung nach Anspurch 10, **dadurch gekennzeichnet,** daß der eine Stützbalken (4) und der zugehörige Hubbalken (6) in Richtung zum Magazin (1) um eine Kerbenteilung verlängert sind und die Klemmeinrichtung (27) an dem verlängerten Ende dieses Hubbalkens (6) angeordnet ist.

12. Vorrichtung nach einem der Ansprüche 9 bis 11, **dadurch** **gekennzeichnet,** daß die Hubbalken (5, 6) über Kurbeltriebe (11, 12, 13, 14) an quer zu ihnen verlaufenden Wellen (15, 16) aufgehängt sind, die von einer gemeinsamen Antriebseinrichtung (32) taktweise um jeweils 360° drehbar sind.

13. Vorrichtung nach Anspruch 7, **dadurch gekennzeichnet,** daß das Magazin (40) von zwei im Querabstand zueinander angeordneten und ständig umlaufenden Transportbändern gebildet ist, auf denen die Stäbe (2) an die Vereinzelungseinrichtung (41) heranführbar sind.

14. Vorrichtung nach Anspruch 13, **dadurch gekennzeichnet,** daß die Vereinzelungseinrichtung (41) aus zwei auf einer gemeinsamen Welle (42) sitzenden Sperrscheiben (43, 44) gebildet ist, die am Umfang mit je einem Ausschnitt (43, 44) zur Aufnahme und gesteuerten Vorwärtsbewegung eines Stabes (2) versehen sind.

15. Vorrichtung nach Anspruch 13 oder 14, **dadurch gekenn-** **zeichnet,** daß die Transporteinrichtung (50) aus zwei mit Abstand parallelen und taktweise antreibbaren Förderbändern (47, 49) besteht, auf denen in gleichmäßiger Verteilung paarweise miteinander fluchtende Führungselemente (52, 55) für die Stäbe (2) angeordnet sind.

16. Vorrichtung nach Anspruch 15, **dadurch gekennzeichnet,** daß das eine Förderband (47) der Transporteinrichtung (50) bis zum Magazin (40) hin verlängert ist und daß in dem Verlängerungsbereich ein steuerbarer Klemmdeckel (54) angeordnet ist, der die Stäbe (2) in dem Verlängerungsbereich an den Führungselementen (52) festklemmt.

## Claims

1. A method for the introduction and removal of smoking- or cooking bars (2) to and from a loading station at which a bar (2) is clamped each time at one end for automatically hanging a number of sausages on loops attached thereto, which bar can be alternately supported at at least two points at a distance from the end, characterised in that the bars are first taken individually and successively from a supply (1, 40) to a ready position in which the bar (2) which is ready is engaged underneath between its two ends in a horizontal position, that the said bar (2) is thereafter clamped at one end and is fed in this state to the loading station by means of a substantially horizontal movement transverse to its longitudinal direction, and that finally the loaded bar (2) is grasped underneath at its two ends at the loading station and is fed by means of at least one further substantially horizontal transverse movement in the same direction to a collecting station, in which a number of loaded bars (2) are collected for batchwise transfer to a smoking- or cooking trolley.

2. A method according to claim 1, characterised in that the transverse movements of all bars (2) are effected simultaneously.

3. A method according to claim 1 or 2, characterised in that the transverse movements are repeated within a predetermined timed cycle.

4. A method according to any one of the preceding claims, characterised in that the transverse movements of the loaded smoking- or cooking bars (2) are combined with raising and lowering movements.

5. A method according to any one of the preceding claims, characterised in that the courses of the individual movements are electronically controlled in accordance with a predetermined programme which stops the operation of upstream devices for sausage manufacture and suspension during a complete introduction and removal cycle.

6. A method according to claim 5, characterised in that the combined movements of the loaded smoking- or cooking bars (2) proceed in a semicircle.

7. A device for carrying out the method according to any one of the preceding claims, characterised by
- a magazine (1; 40) for supplying a number of unloaded smoking- or cooking bars (2) in a horizontal position,
- a controllable separating device (30, 31; 41) which moves each bar (2) from the magazine (1; 40) to the ready position,
- a clamping device (27; 54) by means of which the bar (2) which is ready is transferred to a loading position and is clamped there at one end, and
- a transport device (3, 4, 5, 6;50) by means of which the bar (2) which is laden with sausages (33) in the loading position can be grasped at both ends and can be fed to a collecting station.

8. A device according to claim 7, characterised in that the magazine (1) is constructed as a box with a funnel-shaped cross-section with an upper feed opening and a lower discharge opening, and that controllable retention members (30, 31), from which the magazined smoking- or cooking bars (2) can be released individually to the ready position under the force of gravity, are disposed at the discharge opening.

9. A device according to claim 7 or 8, characterised in that the transport device consists of two fixed supporting beams (3, 4) disposed horizontally with a transverse separation and two lifting beams (5, 6) each disposed movably near a supporting beam, by means of which the bars (2) can be lifted from the supporting beams (3, 4), can be moved horizontally by a certain extent and can be deposited on the supporting beams (3, 4) again.

10. A device according to claim 9, characterised in that the lifting beams (5, 6) and the supporting beams (3, 4) are provided with indentations for receiving the bars (2) with a distance equal to the horizontal movement step.

11. A device according to claim 10, characterised in that one supporting beam (4) and the associated lifting beam (6) are extended by one indentation spacing in the direction towards the magazine (1) and the clamping device (27) is disposed on the extended end of this lifting beam (6).

12. A device according to any one of claims 9 to 11, characterised in that the lifting beams (5, 6) are suspended via crank mechanisms (11, 12, 13, 14) on shafts (15, 16) extending transversely to the lifting beams, which shafts can be rotated in cycles by 360° each time by a common drive device (32).

13. A device according to claim 7, characterised in that the magazine (40) is formed from two continuously circulating conveyor belts at a transverse separation from each other, on which the bars (2) can be fed to the separating device (41).

14. A device according to claim 13, characterised in that the separating device (41) is formed from two retaining discs (43, 44) mounted on a common shaft (42), each of which discs is provided with a cut-out (43, 44) at its circumference for the receipt and controlled forward movement of a bar (2).

15. A device according to claim 13 or 14, characterised in that the transport device (50) consists of two conveyor belts (47, 49) which are parallel to and at a distance from each other, which can be driven in cycles, and on which guide elements (52, 55) for the bars (2) are disposed in a uniform distribution and aligned with each other in pairs.

16. A device according to claim 15, characterised in that one conveyor belt (47) of the transport device (50) is extended as far as the magazine (40) and that a controllable clamping cover (54), which clamps the bars (2) to the guide elements (52) in the extension region, is disposed in the extension region.

## Revendications

1. Procédé d'amenée et d'évacuation de barres de support de cuisson ou de fumage (2), vers ou à partir d'un poste de chargement au niveau duquel une barre (2) est chaque fois serrée solidairement par une extrémité pour l'accrochage automatique d'un certain nombre de saucisses par l'intermédiaire de boucles qu'elle porte, et qui peut être soutenue au moins alternativement en deux points éloignés de cette extrémité, procédé caractérisé en ce que les barres sont tout d'abord conduites d'une réserve (1, 40), séparément et successivement dans une position préparatoire dans laquelle la barre (2) ainsi mise à disposition est prise en position horizontale entre ses deux extrémités, puis cette barre (2) est fixée solidairement par une extrémité et est conduite dans cette situation par un mouvement essentiellement horizontal, transversalement à sa direction longitudinale vers le poste de chargement puis la barre (2) chargée est prise par en-dessous aux deux extrémités dans le poste de chargement et est conduite à un poste collecteur par au moins un autre mouvement transversal essentiellement horizontal, dans la même direction, poste collecteur dans lequel on regroupe un nombre de barres (2), chargées, pour les transférer, en groupe, sur un chariot de fumage ou de cuisson.

2. Procédé selon la revendication 1, caractérisé en ce que les mouvements transversaux de toutes les barres (2) se font simultanément.

3. Procédé selon la revendication 1 ou 2, caractérisé en ce que les mouvements transversaux se répètent suivant une cadence donnée.

4. Procédé selon l'une des revendications précédentes, caractérisé en ce que les mouvements transversaux des barres de cuisson ou de fumage, chargées, (2) sont combinés à des mouvements de levage et d'abaissement.

5. Procédé selon l'une des revendications précédentes, caractérisé en ce que les différents mouvements sont commandés électroniquement suivant un programme prédéterminé et pendant un cycle complet d'amenée et d'évacuation, la mise en route d'installation en amont pour la fabrication de saucisses et leur accrochage est verrouillée.

6. Procédé selon la revendication 5, caractérisé en ce que les mouvements combinés des barres chargées pour la cuisson ou le fumage (2) sont des mouvements en demi-cercle.

7. Dispositif pour la mise en oeuvre du procédé selon l'une des revendications précédentes, caractérisé en ce qu'il comprend :
- un magasin (1 ; 40) contenant un certain nombre de barres de cuisson ou de fumage (2), non chargées, ces barres se trouvant en position horizontale,
- un dispositif séparateur (30, 31 ; 41), commande, qui assure l'extraction de chaque barre en-dehors du magasin (1 ; 40) pour être mis en position préparatoire,
- un dispositif de serrage (27 ; 54) qui conduit la barre (2), prête, dans une position de chargement et la barre est fixée par une extrémité, et
- un dispositif de transport (3, 4, 5, 6 ; 50) qui peut saisir les deux extrémités de la barre (2) à laquelle ont été accrochées les saucisses (33) dans la position de chargement, et cette barre peut être conduite dans un poste collecteur.

8. Dispositif selon la revendication 7, cacaractérisé en ce que le magasin (1) est un caisson à section en forme de trémie avec une ouverture d'entrée, supérieure, et une ouverture de sortie inférieure et en ce que l'ouverture de sortie est munie d'organes de blocage (30, 31) commandés permettant de libérer les barres de cuisson et de fumage (2), emmagasinées, sous l'effet de leur poids, pour les conduire séparément en position préparatoire.

9. Dispositif selon la revendication 7 ou 8, caractérisé en ce que l'installation de transport se compose de deux poutres d'appui (3, 4), fixes, séparées l'une de l'autre d'un intervalle transversale et en ce que deux poutres de déplacement (5, 6) sont montées mobiles chaque fois à c8té d'une poutre d'appui, ces poutres de déplacement pouvant soulever les barres (2) des poutres d'appui (3, 4), les déplacer horizontalement d'une certaine distance puis les déposer de nouveau sur les poutres d'appui (3, 4).

10. Dispositif selon la revendication 9, caractérisé en ce que les poutres de déplacement (5, 6) et les poutres d'appui (3, 4) sont munies d'encoches pour recevoir les barres (2), ces encoches étant distantes d'une distance égale au mouvement de dépla- cement horizontal.

11. Dispositif selon la revendication 10, caractérisé en ce que l'une des poutres d'appui (4) et la poutre de déplacement (6) correspondante est prolongée en direction du magasin (1), d'une subdivision d'encoches et le dispositif de serrage (27) est prévu sur l'extrémité prolongée de cette poutre de déplacement (6).

12. Dispositif selon l'une des revendications 9 à 11, caractérisé en ce que les poutres de déplacement (5, 6) sont suspendues par des transmissions à manivelle (11, 12, 13, 14) sur des arbres (15, 16) transversaux par rapport aux poutres, et ces arbres peuvent être entraînés en cadence chaque fois de 360° par un dispositif d'entraînement (32).

13. Dispositif selon la revendication 7, caractérisé en ce que le magasin (40) est formé par deux bandes transporteuses écartées transversalement l'une de l'autre et tournant en continu, bandes transporteuses qui conduisent les barres (2) dans le dispositif séparateur (41).

14. Dispositif selon la revendication 23, caractérisé en ce que le dispositif séparateur (41) se compose de deux disques de verrouillage (43, 44) portés par un axe commun (42), chacun de ces disques ayant dans sa périphérie une découpe (43, 44) pour recevoir et commander le mouvement d'avancée d'une barre (2).

15. Dispositif selon la revendication 13 ou 14, caractérisé en ce que le dispositif de transport (50) se compose de deux bandes transporteuses (47, 49) entraînées en cadence, parallèles et écartées, ces bandes ayant des paires d'éléments de guidage alignés (52, 55) pour les barres (2), ces éléments de guidage étant répartis régulièrement.

16. Dispositif selon la revendication 15, caractérisé en ce que l'une des bandes transporteuses (47) du dispositif de transport (50) est prolongée jusqu'au magasin (40) et en ce que dans la zone de prolongement il est prévu un panneau de serrage (54) commandé qui pince les barres (2) dans la zone du prolongement contre les éléments de guidage (52).
